# EUROPEAN PATENT APPLICATION

(11) **EP 4 492 502 A1**
(43) Date of publication of application: **15.01.2025**
(21) Application number: 23765943.8
(22) Date of filing: 06.03.2023
(51) Int. Cl.: H01M 4/62

(54) **LITHIUM SUPPLEMENT ADDITIVE, PREPARATION METHOD THEREFOR, AND APPLICATION THEREOF**

(30) Priority: 10.03.2022 CN 202210254247
(71) Applicant: Shenzhen Innovazone Technology Co., Ltd., Shenzhen, Guangdong 518000 (CN)
(72) Inventor: LAI, Jiayu, Shenzhen, Guangdong 518000 (CN); WAN, Yuanxin, Shenzhen, Guangdong 518000 (CN); KONG, Lingyong, Shenzhen, Guangdong 518000 (CN); TAN, Qiqing, Shenzhen, Guangdong 518000 (CN); ZHANG, Li, Shenzhen, Guangdong 518000 (CN); ZHAO, Zhongke, Shenzhen, Guangdong 518000 (CN)
(74) Representative: Di Giovine, Paolo
(86) International application number: PCT/CN2023/079868
(87) International publication number: WO 2023/169365

(57) **Abstract**

The present application relates to the technical field of lithium-ion battery additives, and provides a lithium supplement additive comprising α-phase lithium nitride and/or β-phase lithium nitride. According to the lithium supplement additive provided by the present application, the comprised pure α-phase lithium nitride has high lithium ion conductivity, thereby facilitating the de-intercalation of lithium ions; the comprised pure β-phase lithium nitride has a high energy barrier for lithium-ion mobility and a high decomposition voltage, so that the mobility of lithium ions in a battery system is more stable; and the comprised mixed-phase lithium nitride has reduced activity and can be prevented from reacting with widely used N-methylpyrrolidone (NMP) and polyvinylidene fluoride (PVDF) during a homogenizing process, and thus has good stability. Therefore, if the lithium nitride provided by the present application is used as a lithium supplement additive, during a first charging process of a battery, the lithium nitride can supplement lithium ions consumed for forming an SEI film on a negative electrode, thereby keeping lithium ions in a battery system sufficient, improving the efficiency of the first charging and the overall electrochemical performance of a battery, and achieving a stable voltage change during a charging process.

## Description

This application claims the priority of Chinese patent application No. 202210254247.0, titled "Lithium-Supplementing Additive, Preparation Method Therefor, and Application Thereof", filed on March 10, 2022, with the Chinese Patent Office, the entire contents of which are incorporated herein by reference.

### TECHNICAL FIELD

The present application belongs to the field of additives for lithium-ion batteries, and in particular to a lithium-supplementing additive, a preparation method therefor, and application thereof.

### BACKGROUND

Lithium-supplementing additives with high specific capacity can form SEI film during the first charge and discharge of lithium-ion batteries, reduce the loss of active lithium in the cathode material, and thus improve the battery's initial Coulombic efficiency and battery capacity. At present, the main methods of lithium supplementation are cathode lithium supplementation and anode lithium supplementation. However, the processes of lithium powder spraying, early formation, and anode addition in the anode lithium supplementation technology have strict requirements on equipment and process technology, and are difficult to widely use at the current technical level. The cathode lithium supplementation by lithium-rich materials can achieve pre-lithiation of the anode during the first charge by introducing non-metallic lithium compounds into the cathode. However, these non-metallic lithium compounds are unstable in the air and are easily deteriorated by reacting with water vapor and oxygen in the air. For example, lithium nitride prepared by conventional methods has an uncontrollable ratio of its crystalline phases and poor stability. When it is used as a lithium-supplementing additive incorporated into the lithium battery preparation process, the specific capacity thereof will be unstable, which affects the consistency of the battery cell capacity. Therefore, these non-metallic lithium compounds can only be used in an inert environment, which limits large-scale application thereof.

### TECHNICAL PROBLEMS

An objective of the embodiments of the present application is to provide a lithium-supplementing additive, a preparation method therefor, and application thereof, solving the technical problem of poor stability in the existing lithium-supplementing additives.

### TECHNICAL PROPOSALS

In order to achieve the above objective, the technical proposals adopted in the embodiments of the present application are as follows:
In a first aspect, the present application provides a lithium-supplementing additive, the lithium-supplementing additive includes lithium nitride, the lithium nitride includes α-phase lithium nitride and/or β-phase lithium nitride.
In a second aspect, the present application provides a preparation method for a lithium-supplementing additive, including the following steps:
   providing metallic lithium; and
   placing the metallic lithium in a nitrogen atmosphere for calcination treatment, and grinding to obtain lithium nitride.
In a third aspect, the present application provides a cathode material, which includes the electrode lithium-supplementing additive provided in the present application or the lithium-supplementing additive prepared by the preparation method provided in the present application.
In a fourth aspect, the present application provides a secondary battery, which includes the cathode material provided in the present application.

### ADVANTAGEOUS EFFECTS

The lithium-supplementing additive provided in the embodiments of the present application has the following advantageous effects: the lithium-supplementing additive contains lithium nitride, which is pure α-phase lithium nitride or pure β-phase lithium nitride or a mixed-phase lithium nitride consisting of α and β crystalline phases. The lithium-ion conductivity of pure α-phase lithium nitride is high, which is conducive to the release of lithium ions. The lithium-ion migration energy barrier of pure β-phase lithium nitride is high, and its decomposition voltage is also high, which makes the migration of lithium ions in the battery system more stable. The mixed-phase lithium nitride has reduced activity, which avoids reacting with N-methylpyrrolidone (NMP) and polyvinylidene fluoride (PVDF) that are widely used in the homogenization process, thereby having good stability. Therefore, when the lithium nitride provided by the present application is used as a lithium-supplementing additive, the lithium nitride can supplement the lithium ions consumed by the formation of SEI film on the anode during the first charging cycle of the battery, so that the lithium ions in the battery system remain abundant, thereby improving the first charging efficiency and overall electrochemical performance of the battery. Therefore, a relatively smooth voltage change during the charging process can be ensured.

The preparation method of a lithium-supplementing additive provided in the embodiments of the present application has the following advantageous effects: the provided metallic lithium is placed in a nitrogen atmosphere for calcination treatment, and then ground to obtain lithium nitride, which can be used as a lithium-supplementing additive. The preparation process is simple, easy to implement, and has low production cost. In addition, the lithium nitride prepared by the preparation method has good material stability and electrochemical performance, which is conducive to improving the first charging efficiency and overall electrochemical performance of the battery.

The cathode material provided in the embodiments of the present application has the following advantageous effects: the cathode material contains the electrode lithium-supplementing additive provided in the present application or the lithium-supplementing additive prepared by the preparation method provided in the present application, so the cathode material has good material stability and electrochemical properties, so that a relatively smooth voltage change during the charging process can be ensured.

The secondary battery provided in the embodiments of the present application has the following advantageous effects: the secondary battery contains the cathode material provided in the present application. Therefore, during the first charging process, the lithium-supplementing additive contained in the secondary battery of the present application can serve as a lithium source, releasing lithium ions during the first charging process to achieve lithium supplement, thereby maintaining the abundance of lithium ions in the battery system and improving the first charging efficiency and overall charge and discharge performance of the battery.

### BRIEF DESCRIPTION OF THE DRAWINGS

In order to more clearly illustrate the technical proposals in the embodiments of the present application, the drawings used in the descriptions of the embodiments or exemplary technology will be briefly introduced below. Apparently, the drawings described below are only some embodiments of the present application. For those skilled in the art, other drawings can be obtained based on these drawings without creative efforts.
FIG. 1 is a flow chart of the preparation of a lithium-supplementing additive provided in an embodiment of the present application;
FIG. 2 is an XRD pattern of a lithium nitride core provided in an embodiment of the present application;
FIG. 3 is a capacity-voltage diagram of button cells assembled with lithium-supplementing additives provided in Example 5 and Comparative Example 2 of the present application; and
FIG. 4 is a capacity-voltage diagram of button cells respectively having a lithium iron phosphate cathode without the addition of a lithium-supplementing additive and with the addition of the lithium-supplementing additive provided in Example 3 of the present application.

### DETAILED DESCRIPTION OF THE EMBODIMENTS

In order to make the technical problems, technical proposals and advantageous effects to be solved by the present application more clearly understood, the present application is further described in detail in conjunction with the embodiments below. It should be understood that the specific embodiments described herein are only used to explain the present application and are not intended to limit the present application.

In this application, the term "and/or" describes the association relationship of associated objects, indicating that there may be three relationships. For example, A and/or B may mean: A exists alone, A and B exist at the same time, and B exists alone. A and B may be singular or plural. The character "/" generally indicates that the associated objects are in an "or" relationship.

In this application, "at least one" means one or more, and "a plurality of" means two or more. "At least one of the following" or similar expressions refers to any combination of these items, including any combination of single items or plural items. For example, "at least one of a, b, or c", or "at least one of a, b, and c" may all mean: a, b, c, a-b (i.e., a and b), a-c, b-c, or a-b-c, where a, b, and c may be singular or plural.

It should be understood that in the various embodiments of the present application, the size of the serial numbers of the above-mentioned processes does not mean the order of execution, some or all of the steps may be executed in parallel or sequentially, and the execution order of each process should be determined by its function and internal logic, and should not constitute any limitation on the implementation process of the embodiments of the present application.

The terms used in the embodiments of the present application are only for the purpose of describing specific embodiments, and are not intended to limit the present application. The singular forms "a", "said" and "the" used in the embodiments of the present application and the appended claims are also intended to include plural forms, unless the context clearly indicates otherwise.

The weight of the relevant components mentioned in the embodiment description of the present application may not only refer to the specific content of each component, but also indicate the proportional relationship between the weights of the components. Therefore, as long as the content of the relevant components is proportionally increased or reduced according to the description in the embodiments of the present application, it is within the scope disclosed in the embodiments of the present application. Specifically, the mass described in the embodiments of the present application may be a mass unit known in the art of chemical engineering such as µg, mg, g, kg, and the like.

The terms "first" and "second" are used only for descriptive purposes to distinguish objects such as substances from each other, and should not be understood as indicating or implying relative importance or implicitly indicating the number of technical features indicated. For example, without departing from the scope of the embodiments of the present application, the first XX may also be referred to as the second XX, and similarly, the second XX may also be referred to as the first XX. Thus, the features defined as "first" and "second" may explicitly or implicitly include one or more of the features.

A first aspect of an embodiment of the present application provides a lithium-supplementing additive, the lithium-supplementing additive includes lithium nitride, and the lithium nitride includes α-phase lithium nitride and/or β-phase lithium nitride.

The lithium-supplementing additive provided in the embodiment of the present application includes lithium nitride, which is pure α-phase lithium nitride or pure β-phase lithium nitride or mixed-phase lithium nitride composed of α crystalline phase and β crystalline phase. The lithium-ion conductivity of pure α-phase lithium nitride is high, which is conducive to the release of lithium ions. The lithium-ion migration energy barrier of pure β-phase lithium nitride is high, and the decomposition voltage is also high, which makes the migration of lithium ions in the battery system more stable. The mixed-phase lithium nitride has reduced activity, which can avoid the reaction with N-methylpyrrolidone (NMP) and polyvinylidene fluoride (PVDF) that are widely used in the homogenization process, thereby having good stability when used. Therefore, when the lithium nitride provided in the present application is used as a lithium-supplementing additive, the lithium nitride can supplement the lithium ions consumed by the formation of the SEI film on the anode during the first charging cycle of the battery, so that the lithium ions in the battery system remain abundant, thereby improving the first charging efficiency and overall electrochemical performance of the battery. Therefore, a relatively smooth voltage change during the charging process can be ensured.

In an embodiment, the lithium nitride includes α-phase lithium nitride and/or β-phase lithium nitride, that is, the lithium nitride may include any one of α-phase lithium nitride, β-phase lithium nitride, and a mixed-phase lithium nitride consisting of α crystalline phase and β crystalline phase. In a specific embodiment, the lithium nitride core may be α-phase lithium nitride, β-phase lithium nitride, or a mixed-phase lithium nitride composed of α crystalline phase and β crystalline phase.

In an embodiment, the lithium nitride includes α-phase lithium nitride and β-phase lithium nitride, and the mass ratio of α-phase lithium nitride to β-phase lithium nitride is (2-10):(90-98) or (70-98):(2-30). Within the range of the mass ratio of α-phase lithium nitride to β-phase lithium nitride provided in this embodiment, the stability of the mixed-phase lithium nitride of α crystalline phase and β crystalline phase is optimal, and the number of lithium ions released from the lithium nitride during the first cycle of charging is the maximum, which can optimize the first charging efficiency and overall electrochemical performance of the battery. In a specific embodiment, the mass ratio of α-phase lithium nitride to β-phase lithium nitride may be, but not limited to, 2:90, 2:92, 2:94, 2:96, 2:98, 6:91, 6:93, 6:95, 6:97, 6:98, 10:90, 10:92, 10:94, 2:96, 2:98, 70:2, 70:10, 70:20, 70:30, 85:2, 85:10, 85:20, 85:30, 98:2, 98:10, 98:20, and 98:30.

In an embodiment, lithium nitride may be a primary particle of lithium nitride, or a secondary particle formed by agglomeration of primary particles. When lithium nitride is a primary particle or a secondary particle, the particle size of lithium nitride is 0.1 to 50 µm. Preferably, the particle size of lithium nitride is 1 to 5 µm. Specifically, the particle size of the lithium nitride core may be, but not limited to, 0.1 µm, 0.5 µm, 1 µm, 2 µm, 3 µm, 4 µm, 5 µm, 10 µm, 20 µm, 30 µm, 40 µm, and 50 µm. Within the particle size range of lithium nitride provided in the embodiment of the present application, the conductivity and stability of the lithium-supplementing additive can be optimized.

In an embodiment, the lithium-supplementing additive further includes a two-dimensional conductive material bonded to the surface of lithium nitride. The two-dimensional conductive material contained in the embodiment of the present application is at least bonded to the surface of lithium nitride. Since the two-dimensional conductive material has good chemical stability and conductivity, bonding to the surface of lithium nitride can improve the stability of the lithium nitride material and increase the overall conductivity of the lithium-supplementing additive, which is conducive to stabilizing the voltage during the charging process.

In an embodiment, the two-dimensional conductive material bonded to the surface of lithium nitride forms a two-dimensional conductive material coating layer that fully or partially covers lithium nitride. Here, the lithium-supplementing additive in the embodiment of the present application constitutes a core-shell structure, the above particulate lithium-supplementing material constitutes a core, and the two-dimensional conductive material coating layer constitutes a shell layer, or at least a part of the shell layer. The two-dimensional conductive material coating layer may fully or partially cover the lithium-supplementing material, namely the lithium nitride core. It is ideal to be a full coverage, which can improve the protective effect of the two-dimensional conductive material coating layer on the lithium-supplementing material, isolate the lithium nitride core from contact with the air, and avoid water, oxygen and carbon dioxide in the air from corroding the lithium nitride core, which can improve the stability of the lithium nitride material. In addition, two-dimensional conductive material having a two-dimensional layered structure has the ability to adsorb and desorb various atoms or molecules, which facilitates adsorbing on the surface of lithium nitride to form a uniform and tight coating layer, which is beneficial to the release of lithium ions during the charging process of lithium nitride.

In an embodiment, the two-dimensional conductive material includes at least one of graphene, graphyne, a transition metal disulfide, and a MXenes material; the general formula of the MXenes material is Mₙ₊₁Xₙ Tₓ, where M includes at least one of Ti, Cr, Mo, V, Nb, Hf, Ta, and Sc; X includes at least one of C and N; Tₓ includes at least one of OH⁻, F⁻, O²⁻, NH⁴⁺, and NH₃; and n is 1 to 4. Specifically, Mₙ₊₁XₙTₓ may include but is not limited to at least one of Ti₂CO, Ti₃C₂O, Ti₂NO, Ti₃N₂O, Ti₂COH, and Ti₃C₂OH. The transition metal disulfide includes at least one of MoS₂, WS₂, SnS₂, and TiS₂.

In an embodiment, in the lithium-supplementing additive, the mass ratio of lithium nitride to the two-dimensional conductive material coating layer is (9-99):1. Within the range of the mass ratio of lithium nitride to the two-dimensional conductive material coating layer provided in this embodiment, the stability, moisture resistance and conductivity of lithium nitride are optimal, and lithium nitride coated with the two-dimensional conductive material as a lithium-supplementing additive has the best specific capacity and low raw material cost.

The thickness of the two-dimensional conductive material coating layer is 5 to 100 nm, preferably, the thickness of the two-dimensional conductive material coating layer is 10 to 30 nm. Specifically, the thickness of the two-dimensional conductive material coating layer may be but not limited to 5 nm, 7 nm, 9 nm, 10 nm, 15 nm, 20 nm, 25 nm, 30 nm, 40 nm, 50 nm, 60 nm, 70 nm, 80 nm, 90 nm, and 100 nm. The particle size of the lithium-supplementing additive is 5 to 60 µm, preferably, the particle size of the lithium-supplementing additive is 5 to 10 µm. The particle size of the specific lithium-supplementing additive may be but not limited to 5 µm, 6 µm, 7 µm, 8 µm, 9 µm, 10 µm, 20 µm, 30 µm, 40 µm, 50 µm, and 60 µm. Within the range of the thickness of the two-dimensional conductive material coating layer and the particle size of the lithium-supplementing additive provided in the embodiment of the present application, the conductivity and stability of the lithium-supplementing additive can be optimized.

In an embodiment, the lithium-supplementing additive is placed in the air with a relative humidity of 30% for 24 hours, and the content of lithium hydroxide is no more than 45%.

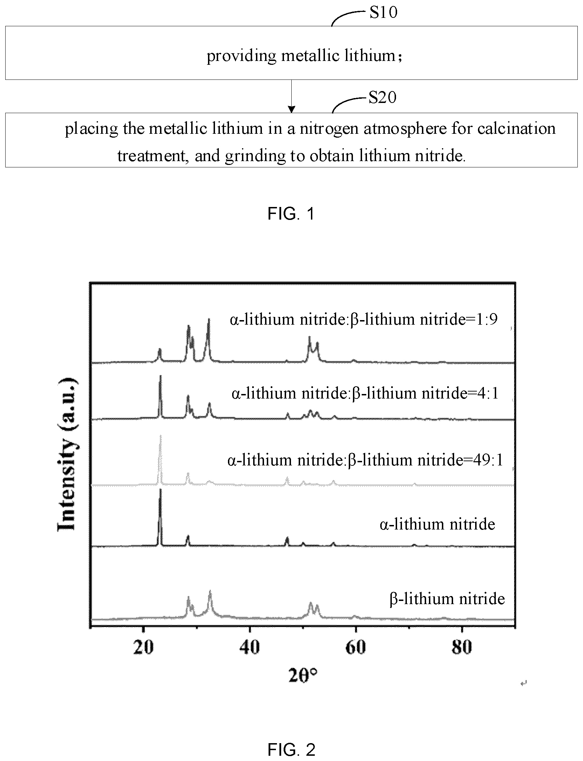

A second aspect of the present application provides a preparation method for a lithium-supplementing additive, as shown in FIG. 1, including the following steps S10 to S20:
in step S10: metallic lithium is provided; and
in step S20: the metallic lithium is placed in a nitrogen atmosphere for calcination treatment, and then ground to obtain lithium nitride.

In the preparation method for the lithium-supplementing additive provided in the embodiment of the present application, the provided metallic lithium is placed in a nitrogen atmosphere for calcination treatment, and ground to obtain lithium nitride, which can be used as a lithium-supplementing additive. The preparation process is simple, easy to implement, and has low production cost. In addition, the lithium nitride prepared by the preparation method has good material stability and electrochemical properties, which is conducive to improving the first charging efficiency and overall electrochemical performance of the battery.

In step S20, the preparation method for lithium nitride includes: placing the metallic lithium in a nitrogen atmosphere for calcination treatment, and then grinding to obtain lithium nitride.

In an embodiment, the calcination treatment is carried out in an inert gas, and the calcination treatment includes: introducing nitrogen and inert gas at a flow ratio of (1-9):1, increasing the temperature to 180°C to 900°C at a rate of 1 to 10°C/min, holding for 5 to 24 hrs, and then introducing solely nitrogen, and reducing the temperature to 25°C at a rate of 1 to 50°C/min.

In some embodiments, the flow ratio of nitrogen to inert gas is (1-9):1. Within the range of the flow ratio of nitrogen to inert gas provided in this embodiment, it is beneficial to improve the stability of the carburizing reaction and the experimental safety during the calcination process. Specifically, the flow ratio of nitrogen to inert gas may be, but is not limited to, 1:1, 2:1, 3:1, 4:1, 5:1, 6:1, 7:1, 8:1, 9:1, and 7:3.

In some embodiments, the heating rate of the calcination process is 1 to 10°C/min. The heating rate may be adjusted according to the heating capacity of the equipment used. Within the range of the heating rate of the calcination process provided in the embodiment of the present application, a uniform temperature can be achieved in the furnace chamber with moderate time consumption, and the negative impact on the equipment can be reduced. Specifically, the heating rate may be but not limited to 1°C/min, 2°C/min, 3°C/min, 4°C/min, 5°C/min, 6°C/min, 7°C/min, 8°C/min, 9°C/min, and 10°C/min.

In some embodiments, the holding temperature in the calcination treatment is 180°C to 900°C, and the dwell time is 5 to 24 hrs. Within the ranges of the holding temperature and dwell time of the calcination treatment provided in the embodiment of the present application, it can save energy consumption and reduce material costs. Specifically, the holding temperature of the calcination treatment may be but not limited to 180°C, 200°C, 300°C, 400°C, 500°C, 600°C, 700°C, 800°C, and 900°C, and the dwell time in the calcination treatment may be but not limited to 5 hrs, 7 hrs, 9 hrs, 10 hrs, 12 hrs, 14 hrs, 16 hrs, 18 hrs, 20 hrs, 22 hrs, and 24 hrs.

In some embodiments, the pressure of the calcination treatment is 0.1 to 100 MPa. The ranges of the holding temperature and pressure of the calcination treatment provided in the embodiments of the present application are conducive to lowering the requirements for equipment and reducing production costs. Specifically, the pressure of the calcination treatment may be, but not limited to, 0.1 MPa, 0.5 MPa, 1 MPa, 10 MPa, 30 MPa, 50 MPa, 70 MPa, 90 MPa, and 100 MPa.

In some embodiments, the cooling rate in the calcination treatment is 1 to 50°C/min. Since α-phase lithium nitride is a high-temperature stable phase, a temperature above 500 K is conducive to the conversion of β-phase lithium nitride into α-phase lithium nitride; β-phase lithium nitride is a low-temperature stable phase, and a temperature below 300 K is conducive to the stability of β-phase lithium nitride. Therefore, after nitriding via a high-temperature and high-pressure gas-liquid reaction, α-phase lithium nitride is converted into β-phase lithium nitride as the temperature decreases. Accordingly, by controlling the cooling rate under high pressure, the conversion of α-phase lithium nitride into β-phase lithium nitride can be inhibited, thereby achieving the regulation of the mass ratio between β-phase lithium nitride and α-phase lithium nitride. Cooling in the high-pressure environment and within the range of cooling rate provided in the embodiment of the present application can prepare mixed lithium nitride of α crystalline phase and β-phase within the mass ratio range provided in the embodiment of the present application, so that the stability and lithium intercalation capacity of the prepared mixed lithium nitride of α crystalline phase and β-phase are optimal, so that the first charging efficiency and overall electrochemical performance of the battery are optimized. Specifically, the cooling rate may be, but not limited to 1°C/min, 5°C/min, 10°C/min, 15°C/min, 20°C/min, 25°C/min, 30°C/min, 35°C/min, 40°C/min, 45°C/min, and 50°C/min.

In an embodiment, the preparation method for the lithium-supplementing additive further includes step S30:
in step S30: the lithium nitride and the two-dimensional conductive material are dispersed in a solvent to obtain a mixed solution, and the mixed solution is dried to form a lithium-supplementing additive coated with a two-dimensional conductive material.

In step S30, the solvent includes at least one of N,N-dimethylformamide, tetrahydrofuran, n-hexane, and benzene. In a specific embodiment, the solvent may be N,N-dimethylformamide, tetrahydrofuran, or n-hexane.

In an embodiment, the conditions of the drying process include: a drying temperature of 30°C to 100°C and a drying time of 6 to 10 hrs. Within the range of the drying temperature and drying time provided in the present application, the solvent volatilization rate can be moderate, and lithium nitride can be prevented from being enriched on the surface, which is beneficial for the two-dimensional conductive material to form a uniform coating layer on the surface of lithium nitride. Specifically, the drying temperature may be but not limited to 30°C, 40°C, 50°C, 60°C, 70°C, 80°C, 90°C, and 100°C. The drying time may be, but not limited to, 6 hrs, 7 hrs, 8 hrs, 9 hrs, and 10 hrs.

A third aspect of an embodiment of the present application provides a cathode material, which contains the electrode lithium-supplementing additive provided in the present application or the lithium-supplementing additive prepared by the preparation method provided in the present application.

Since the cathode material provided in the embodiment of the present application contains the electrode lithium-supplementing additive provided in the present application or the lithium-supplementing additive prepared by the preparation method provided in the present application, it has good material stability and electrochemical performances and can ensure that the voltage of the battery changes smoothly during the charging process.

A fourth aspect of an embodiment of the present application provides a secondary battery, which contains the cathode material provided by the present application.

The secondary battery provided in the embodiment of the present application contains the cathode material provided in the present application. Therefore, during the first charging process, the lithium-supplementing additive contained in the electrode plate of the present application can be used as a lithium source, and release lithium ions during the first charging process to achieve lithium supplementation, thereby maintaining the abundance of lithium ions in the battery system and improving the first charging efficiency and overall charge and discharge performance of the battery.

In an embodiment, when charging at a constant current and constant voltage, and under conditions of a charging voltage of 2.5 to 4.3 V, a charging current of 0.1 C, and a cut-off current of 0.01 C, the number of lithium ions deintercalated from lithium nitride during the first cycle of charging of the secondary battery is 1.2 to 2.8.

The various aspects are explained below in conjunction with specific examples.

### 1. Lithium-supplementing additive and preparation method therefor:

### Example 1

This embodiment provides a lithium-supplementing additive and a preparation method therefor. The lithium-supplementing additive includes pure α-phase lithium nitride and a graphene coating layer bonded to the surface of the α-phase lithium nitride core.

The preparation method for the lithium-supplementing additive of this embodiment includes the following steps:
S10: metallic lithium was provided;
S20: the metallic lithium was placed in a corundum boat and placed into a high-temperature and high-pressure reactor, and argon was introduced at a flow rate of 300 mL/min for 30 minutes for exhaust; then argon and nitrogen were introduced at a flow rate ratio of 70:30 mL/min, and the temperature was increased to 800°C at a rate of 10°C/min and held for 10 hours, then the pressure in the furnace was increased to 5 MPa, and the temperature was reduced to 25°C at a rate of 40°C/min to obtain α-phase lithium nitride; finally, the α-phase lithium nitride was ground to obtain pure α-phase lithium nitride particles.
S30: according to the mass ratio of the α-phase lithium nitride particles to graphene of 30:1, α-phase lithium nitride particles and graphene were added into N,N-dimethylformamide and stirred at high speed for 60 minutes to obtain a mixed solution, and then the mixed solution was dried at a temperature of 50°C for 8 hours to obtain a lithium-supplementing additive in which graphene was coated on the surface of the α-phase lithium nitride particles.

After testing, the particle size of the α-phase lithium nitride particles was 1 to 8 µm, the thickness of the graphene coating layer was 10 to 30 nm, and the particle size of the lithium-supplementing additive was 1.01 to 8.05 µm.

### Example 2

This example provides a lithium-supplementing additive and a preparation method therefor. The lithium-supplementing additive includes pure β-phase lithium nitride and a graphene coating layer bonded to the surface of the β-phase lithium nitride core.

The preparation method for the lithium-supplementing additive of this example is different from that of Example 1 in that, in step S20 of this example, the temperature was lowered to 25°C at a rate of 1°C/min to obtain the lithium-supplementing additive in which graphene was coated on the surface of β-phase lithium nitride particles.

After testing, the particle size of the β-phase lithium nitride particles was 1 to 8 µm, the thickness of the graphene coating layer was 10 to 30 nm, and the particle size of the lithium-supplementing additive was 1.01 to 8.05 µm.

### Example 3

This example provides a lithium-supplementing additive and a preparation method therefor. The lithium-supplementing additive includes α-phase lithium nitride and β-phase lithium nitride.

The preparation method for the lithium-supplementing additive of this example is different from that of Example 1 in that, in step S20 of this example, the temperature was lowered to 25°C at a rate of 32°C/min to obtain a mixed-phase lithium nitride of α crystalline phase and β crystalline phase.

After testing, the particle size of the mixed-phase lithium nitride of α crystalline phase and β crystalline phase was 1 to 8 µm; and the mass ratio of α-phase lithium nitride to β-phase lithium nitride in the mixed-phase lithium nitride of α crystalline phase and β crystalline phase was 90:10.

### Example 4

This example provides a lithium-supplementing additive and a preparation method therefor. The lithium-supplementing additive includes α-phase lithium nitride and β-phase lithium nitride and a graphene coating layer bonded to the surface of the α-phase lithium nitride and β-phase lithium nitride cores.

The preparation method for the lithium-supplementing additive of this example is different from that of Example 1 in that, in step S20 of this example, the temperature was lowered to 25°C at a rate of 35°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 98:2.

### Example 5

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 4 in that, in step S20 of this example, the temperature was lowered to 25°C at a rate of 32°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 90:10.

### Example 6

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S20 of this example, the temperature was lowered to 25°C at a rate of 28°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 80:20.

### Example 7

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S20 of this example, the temperature was lowered to 25°C at a rate of 25°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 70:30.

### Example 8

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S20 of this example, the temperature was lowered to 25°C at a rate of 18°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 10:90.

### Example 9

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S20 of this example, the temperature was lowered to 25°C at a rate of 13°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 8:92.

### Example 10

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S20 of this example, the temperature was lowered to 25°C at a rate of 8°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 5:95.

### Example 11

This example provides a lithium-supplementing additive and a preparation method therefor. The lithium-supplementing additive includes α-phase lithium nitride and β-phase lithium nitride and a graphene coating layer bonded to the surface of the α-phase lithium nitride and the β-phase lithium nitride.

The preparation method for the lithium-supplementing additive of this example is different from that of Example 1 in that, in step S10 of this example, the temperature was lowered to 25°C at a rate of 5°C/min to obtain a lithium-supplementing additive in which graphene was coated on the surface of the α-phase lithium nitride and β-phase lithium nitride cores.

After testing, the particle size of the mixed-phase lithium nitride of α crystalline phase and β crystalline phase was 1 to 8 µm, the thickness of the graphene coating layer was 30 nm, and the particle size of the lithium-supplementing additive was 1.01 to 8.05 µm; and the mass ratio of α-phase lithium nitride to β-phase lithium nitride in the mixed-phase lithium nitride of α crystalline phase and β crystalline phase was 2:98.

### Comparative Example 1

This comparative example provides a lithium-supplementing additive and a preparation method therefor. The lithium-supplementing additive includes lithium nitride particles.

The preparation method for the lithium-supplementing additive of this comparative example includes the following step:
S10: metallic lithium was placed in a corundum boat and placed into a high-temperature and high-pressure reactor, and argon gas was introduced at a flow rate of 300 mL/min for 30 minutes for exhaust; then argon and nitrogen gas were introduced at a flow rate ratio of 70:30 mL/min, and the temperature was increased to 800°C at a rate of 10°C/min, after being held for 10 hours, naturally cooled down to 25°C to obtain lithium nitride; finally, the lithium nitride was ground to obtain lithium nitride particles.

After testing, the particle size of lithium nitride particles was 1 to 8 µm, and the mass ratio of α-phase lithium nitride to β-phase lithium nitride in the lithium nitride particles was 65:35.

### Comparative Example 2

This comparative example provides a lithium-supplementing additive and a preparation method therefor. The lithium-supplementing additive includes lithium nitride particles and a graphene coating layer bonded to the surface of the lithium nitride.

The preparation method for the lithium-supplementing additive of this comparative example is different from that of Comparative Example 1 in that this comparative example further includes the following step:
S20: lithium nitride particles and graphene were added to N,N-dimethylformamide according to the mass ratio of lithium nitride particles to graphene of 30:1 and stirred at high speed for 60 minutes to obtain a mixed solution, and then the mixed solution was dried at a temperature of 50°C for 8 hours to obtain a lithium-supplementing additive in which graphene was coated on the surface of the lithium nitride particles.

After testing, the particle size of the lithium nitride particles was 1 to 8 µm, the thickness of the graphene coating layer was 30nm, the particle size of the lithium-supplementing additive was 1.01 to 8.05µm, and the mass ratio of α-phase lithium nitride to β-phase lithium nitride in the lithium nitride particles was 65:35.

### 2. Analysis of related characteristic tests.

1. Structural characterization of the lithium nitride core contained in the lithium-supplementing additive:
   Lithium nitride cores provided in the above-mentioned Examples 1, 2, 4, 6 and 8 were subjected to X-ray diffraction analysis, and their XRD patterns are shown in FIG. 2. As can be seen from FIG. 2, as the mass proportion of α-phase lithium nitride decreases and the mass proportion of β-phase lithium nitride increases, the intensity of the diffraction peak of the α-phase lithium nitride is correspondingly weakened, and the intensity of the diffraction peak of the β-phase lithium nitride is correspondingly enhanced.
2. Electrochemical performance test and analysis for lithium-ion batteries:
   The lithium-supplementing additives provided in Example 3 and Comparative Example 1 were added to the LFP cathode, and the cathode slurry was prepared with N,N-dimethylformamide solvent. The battery was charged via a constant current and constant voltage method at 0.1 C, with a voltage range of 2.0 to 3.7 V and a cut-off current of 0.01 C, and the charge and discharge performances of the batteries were tested. The test results are shown in Table 1.

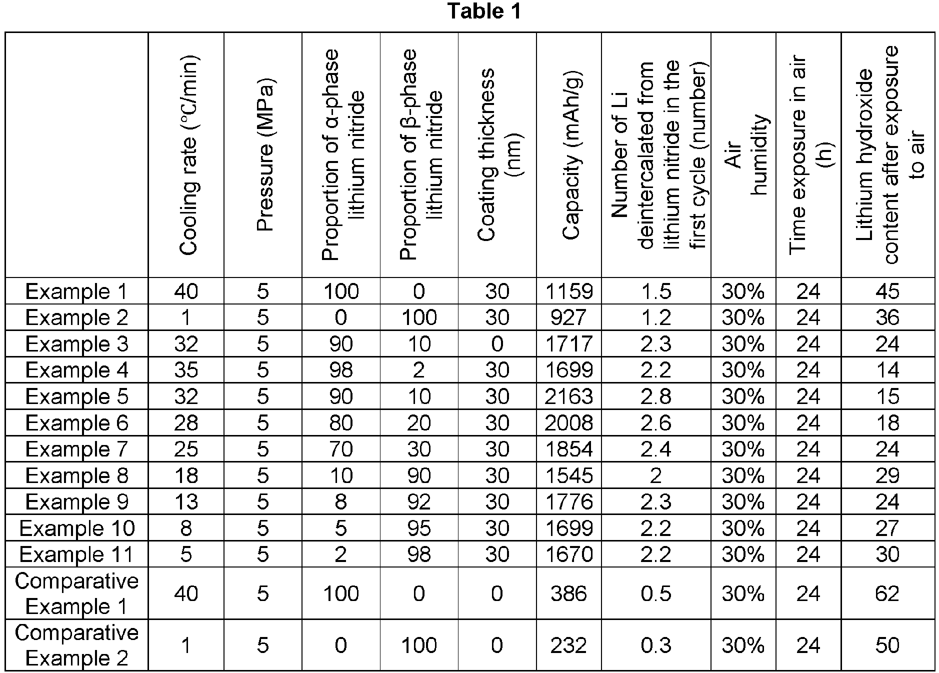

It can be seen from Table 1 that the lithium hydroxide content of the lithium-supplementing additives provided in Examples 1 to 11 after being exposed to 30% air humidity for 24 hours is significantly lower than the lithium hydroxide content of the lithium-supplementing additives provided in Comparative Examples 1 to 2 after being exposed to 30% air humidity for 24 hours, and the battery capacity and the number of lithium deintercalated from lithium nitride in the first cycle corresponding to the lithium-supplementing additives provided in Examples 1 to 11 are significantly higher than those corresponding to the lithium-supplementing additives provided in Comparative Examples 1 to 2. This indicates that the mixed-phase lithium nitride of α crystalline phase and β crystalline phase of the present application has better stability than conventional lithium nitride and enables the battery to have better electrochemical performance.

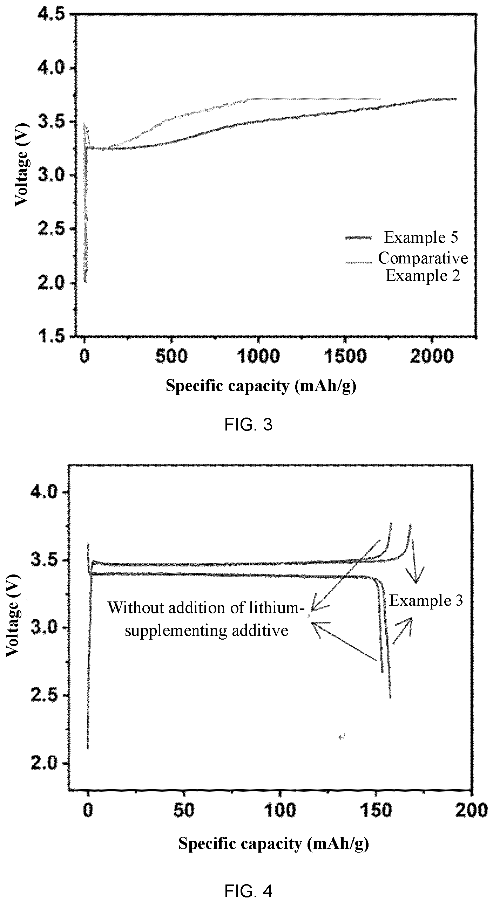

FIG. 3 is a capacity-voltage diagram of button cells assembled with the lithium-supplementing additives provided in Example 5 and Comparative Example 2. As can be seen from FIG. 3, in the mixed-phase lithium nitride coated with graphene provided in Example 5, the mass ratio of α-phase lithium nitride to β-phase lithium nitride is 90:10, and more lithium is released during the charging process when it is used as a lithium-supplementing additive, so that the voltage change during the charging process is relatively stable. This is because when the mass ratio of α-phase lithium nitride to β-phase lithium nitride is 90:10, the stability is optimal. However, when the lithium nitride provided in Comparative Example 2 is used as a lithium-supplementing additive, severe polarization occurs at the beginning of the charging process, which is caused by the poor stability intrinsic to lithium nitride. Therefore, within the range of the mass ratio of α-phase lithium nitride to β-phase lithium nitride provided in the embodiments of the present application, the stability of the mixed-phase lithium nitride of α crystalline phase and β crystalline phase reaches an optimum, and the number of lithium ions deintercalated from lithium nitride during the first charging cycle reaches the maximum, which can maintain the stability of voltage during the battery charging process.

FIG. 4 is a capacity-voltage diagram of button cells having a lithium iron phosphate cathode without the addition of a lithium-supplementing additive and with the addition of the lithium-supplementing additive provided in Example 3, respectively. It can be seen from FIG. 4 that the cathode capacity with the addition of the lithium-supplementing additive provided in Example 3 of the present application is significantly improved. This is because the lithium ions in lithium nitride contained in the lithium-supplementing additive are transferred from the cathode to the anode during the first charging cycle, participating in the formation of the SEI film at the anode, thus avoiding the loss of active lithium ions in the LFP material. Therefore, the lithium-supplementing additive can improve the capacity performance of the LFP battery.

The above are only optional embodiments of the present application and are not intended to limit the present application. For those skilled in the art, the present application may have various changes and variations. Any modification, equivalent substitution, improvement, and the like made within the spirit and principle of the present application should be included in the scope of the appended claims of the present application.

## Claims

1. A lithium-supplementing additive, comprising lithium nitride, and the lithium nitride comprising α-phase lithium nitride and/or β-phase lithium nitride.

2. The lithium-supplementing additive as claimed in claim 1, wherein the lithium nitride comprises the α-phase lithium nitride and the β-phase lithium nitride, and a mass ratio of the α-phase lithium nitride to the β-phase lithium nitride is (2-10):(90-98) or (70-98):(2-30).

3. The lithium-supplementing additive as claimed in claim 1 or 2, wherein the lithium-supplementing additive further comprises a two-dimensional conductive material bonded to a surface of the lithium nitride.

4. The lithium-supplementing additive as claimed in claim 3, wherein the two-dimensional conductive material bonded to the surface of the lithium nitride forms a two-dimensional conductive material coating layer that fully or partially covers the lithium nitride.

5. The lithium-supplementing additive as claimed in claim 4, wherein the two-dimensional conductive material comprises at least one of graphene, graphyne, a transition metal disulfide, and a MXenes material; and
the MXenes material has a general formula of Mₙ₊₁XₙTₓ, where M comprises at least one of Ti, Cr, Mo, V, Nb, Hf, Ta, and Sc, X comprises at least one of C and N, Tₓ comprises at least one of OH⁻, F⁻, O²⁻, NH⁴⁺, and NH₃, and n is 1 to 4.

6. The lithium-supplementing additive as claimed in claim 5, wherein the transition metal disulfide comprises at least one of MoS₂, WS₂, SnS₂, and TiS₂.

7. The lithium-supplementing additive as claimed in any one of claims 4 to 6, wherein, in the lithium-supplementing additive, a mass ratio of the lithium nitride to the two-dimensional conductive material coating layer is (9-99):1.

8. The lithium-supplementing additive as claimed in any one of claims 4 to 6, wherein a thickness of the two-dimensional conductive material coating layer is 5 to 100 nm.

9. The lithium-supplementing additive as claimed in any one of claims 4 to 6, wherein a particle size of the lithium nitride is 0.1 to 50 µm.

10. The lithium-supplementing additive as claimed in any one of claims 4 to 6, wherein a particle size of the lithium-supplementing additive after coating is 5 to 60 µm.

11. The lithium-supplementing additive as claimed in any one of claims 4 to 6, wherein, the lithium-supplementing additive, after being placed in air with a humidity of 30% RH for 24 hours, has a content of lithium hydroxide no more than 45%.

12. A preparation method for a lithium-supplementing additive, comprising:
providing metallic lithium; and
placing the metallic lithium in a nitrogen atmosphere for a calcination treatment, and then grinding to obtain lithium nitride.

13. The preparation method as claimed in claim 12, wherein the calcination treatment comprises:
introducing nitrogen gas and an inert gas at a flow rate ratio of (1-9):1, heating to 180°C to 900°C at a rate of 1 to 10°C/min and holding for 5 to 24 hours, and then introducing solely the nitrogen gas, and cooling down to 25°C at a rate of 1 to 50°C/min.

14. The preparation method as claimed in claim 12 or 13, wherein the preparation method further comprises:
dispersing the lithium nitride and the two-dimensional conductive material in a solvent to obtain a mixed solution, and drying the mixed solution to form a lithium-supplementing additive coated with the two-dimensional conductive material.

15. The preparation method as claimed in claim 14, wherein conditions of drying comprise: a drying temperature of 30°C to 100°C and a drying time of 6 to 10 hours.

16. The preparation method as claimed in claim 14, wherein the solvent comprises at least one of N,N-dimethylformamide, tetrahydrofuran, n-hexane, and benzene.

17. A cathode material, wherein the cathode material contains the lithium-supplementing additive as claimed in any one of claims 1 to 11 and/or the lithium-supplementing additive prepared by the preparation method for a lithium-supplementing additive as claimed in any one of claims 12 to 16.

18. A secondary battery, wherein the secondary battery contains the cathode material as claimed in claim 17.

19. The secondary battery as claimed in claim 18, wherein, by charging via a constant current and a constant voltage with a charging voltage of 2.5 to 4.3 V, a charging current of 0.1 C, and a cut-off current of 0.01 C, the number of lithium ions deintercalated from the lithium nitride is 1.2 to 2.8 during a first charging cycle of the secondary battery.
